(19) Europäisches Patentamt

European Patent Office

Office européen des brevets

(11) **EP 3 589 079 A1**

(12) **EUROPEAN PATENT APPLICATION**

(43) Date of publication:
**01.01.2020 Bulletin 2020/01**

(51) Int Cl.:
***H05B 33/08*** *(2006.01)*

(21) Application number: **19182172.7**

(22) Date of filing: **25.06.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2018 CN 201810721053**

(71) Applicant: **Valeo Interior Controls Co., Ltd.
Shenzhen, Guangdong 518128 (CN)**

(72) Inventors:
• **XI, Yiyi
  Shenzhen, Guangdong 518128 (CN)**
• **SHI, Sanbao
  Shenzhen, Guangdong 518128 (CN)**
• **GONG, Tianxun
  Foshan, Guangdong 528000 (CN)**

(74) Representative: **Khairallah, Murielle
  Valeo Systèmes Thermiques
  8, rue Louis Lormand
  CS80517 - La Verrière
  78322 Le Mesnil Saint Denis Cédex (FR)**

(54) **OPEN CIRCUIT PROTECTION CIRCUIT FOR LED DRIVER**

(57) The present disclosure provides a circuit for open circuit protection of a LED driver, including an open circuit detection sub-circuit and an open circuit protection execution sub-circuit. The open circuit detection sub-circuit may be connected to both ends of each of a plurality of LED strings included in the LED driver, and configured to determine whether one or more of the plurality of LED strings are open according to respective voltage difference across each LED string. The open circuit protection execution sub-circuit may be electrically connected to a first node in the LED driver, and configured to receive a determination result from the open circuit detection sub-circuit, and to control whether to perform open circuit protection or not according to the determination result, wherein the open circuit protection execution sub-circuit is further configured to: clamp a voltage of the first node to a low voltage to perform open circuit protection, in response to the open circuit detection sub-circuit determining that one or more of the plurality of LED strings are open.

EP 3 589 079 A1

**Description**

**CROSS-REFERENCE TO RELATED APPLICATION(S)**

This application claims priority to Chinese Application No. 201810721053.0, filed on June 29, 2018, which is incorporated herein by reference in its entirety.

**TECHNICAL FIELD**

The present disclosure relates to the field of electronic devices, and in particular, to an open circuit protection circuit for an LED driver.

**BACKGROUND**

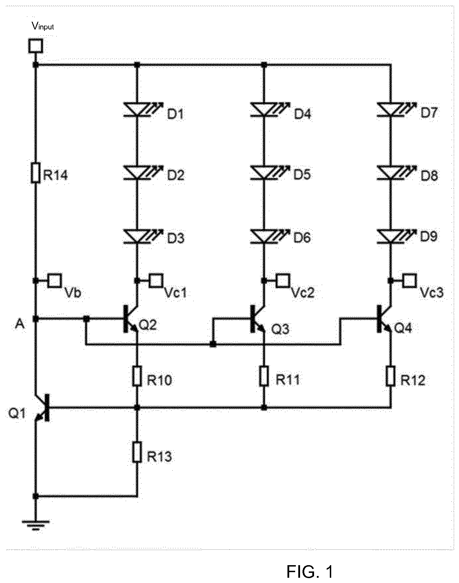

LED lighting circuits are widely used in various fields such as architectural lighting, automotive head and tail lamps, backlights for liquid crystal display devices including personal computers and high definition televisions, and flash lamps. In large-area lighting systems, multiple LEDs are typically used in series as LED strings. FIG. 1 shows a circuit diagram of an LED driver according to the related art. In FIG. 1, every three LEDs are connected in series. An LED may be open due to aging, causing the LEDs of the same LED string fail to illuminate normally. In this case, it is necessary to detect such anomalies and, if necessary, disconnect an input power to protect the LED driver.

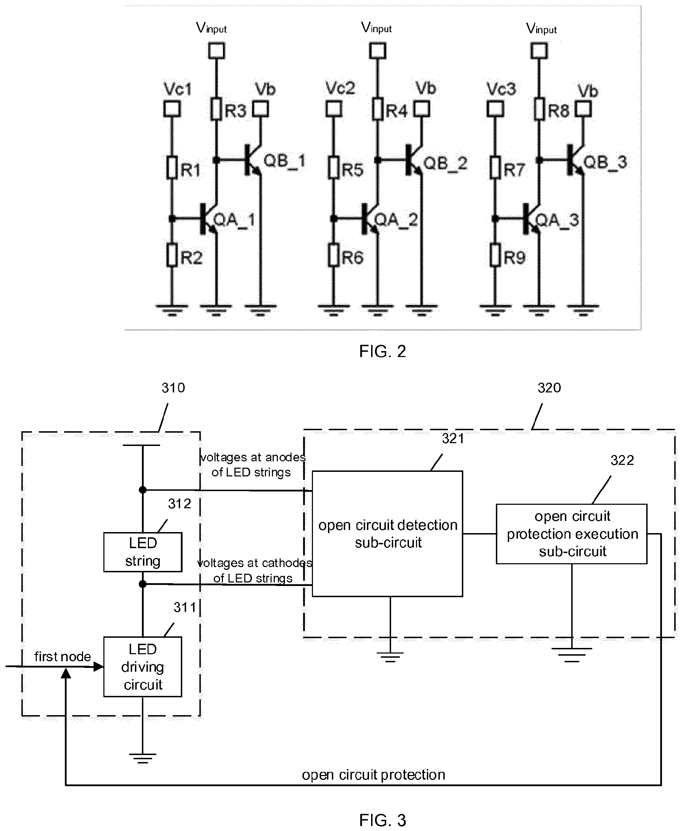

FIG. 2 shows a circuit diagram of an open circuit protection circuit for an LED driver according to the related art. As shown, each LED string branch has a corresponding open circuit protection circuit. For example, in the case where D1 is open, the open circuit protection sub-circuit corresponding to the first LED string in which the diode D1 is located among the open circuit protection circuit shown in FIG. 2 first detects that VC1 is at a low level, and turns off the transistor QA_1. The transistor QB_1 is turned on by the input power Vinput, so that the voltage at the node Vb is lowered to a low level. Since Vb is at a low level, the transistors Q3 and Q4 in the LED driver are also turned off, thereby turning off the LED driver.

However, the open circuit protection circuit shown in FIG. 2 has a problem that the leakage current may be excessive. In particular, although Q3 and Q4 are turned off, for the second LED string, D4, D5, and D6 may form a loop with R5 and R6, causing a significant leakage current in the branch. The same is true for the third LED string. In the example shown in FIG. 2, the leakage current can reach 100 μA or more. In addition, since each branch has a corresponding open circuit protection circuit, the open circuit protection circuit shown in FIG. 2 has too many components, causing a whole circuit being complicated.

In view of this, it is necessary to provide an open circuit protection circuit for an LED driver, which may have a simple structure and a small leakage current.

**SUMMARY**

The present disclosure is to provide an open circuit protection circuit for an LED driver, which may have a simple structure and a small leakage current.

In accordance with an aspect of the present disclosure, a circuit for open circuit protection of a LED driver is provided, comprising: an open circuit detection sub-circuit, connected to both ends of each of a plurality of LED strings comprised in the LED driver, and configured to determine whether one or more of the plurality of LED strings are open according to respective voltage difference across each LED string; and an open circuit protection execution sub-circuit electrically connected to a first node in the LED driver, and configured to receive a determination result from the open circuit detection sub-circuit, and to control whether to perform open circuit protection or not according to the determination result, wherein the open circuit protection execution sub-circuit is further configured to: clamp a voltage of the first node to a low voltage to perform open circuit protection, in response to the open circuit detection sub-circuit determining that one or more of the plurality of LED strings are open.

For example, the open circuit detection sub-circuit comprises: a first transistor having a collector grounded via a first resistor; a plurality of diodes corresponding to the plurality of LED strings, wherein each of the plurality of diodes has a cathode connected to a cathode of a corresponding LED string, and an anode connected to a base of the first transistor; and a Zener diode having a cathode connected to anodes of the plurality of LED strings and an anode connected to an emitter of the first transistor.

As another example, the open circuit detection sub-circuit comprises: a first transistor having a collector grounded via a first resistor, an emitter connected to an anode of the plurality of LED strings, and a base connected to a cathode of a Zener diode; a plurality of diodes corresponding to the plurality of LED strings, wherein each of the plurality of diodes has a cathode connected to a cathode of a corresponding LED string, and an anode connected to an anode of the Zener diode; and the Zener diode.

As another example, the open circuit protection execution sub-circuit comprises: a second transistor having a base connected to the collector of the first transistor, an emitter connected to the ground, and a collector connected to the first node.

As another example, the open circuit detection sub-circuit further comprises a second resistor, wherein the anode of the Zener diode is connected to the emitter of the first transistor via the second resistor.

As another example, the open circuit detection sub-circuit further comprises a second resistor, wherein the emitter of the first transistor is connected to the anodes of the plurality of LED strings via the second resistor.

As another example, the first transistor is a P-type transistor.

As another example, the second transistor is an N-type transistor.

As another example, the circuit may further comprise a first capacitor having one electrode connected between the open circuit detection sub-circuit and the open circuit protection execution sub-circuit, and the other electrode grounded.

## BRIEF DESCRIPTION OF THE DRAWINGS

For a more complete understanding of the present disclosure and its advantages, reference is now made to the following descriptions in connection with the accompanying drawings, in which:

FIG. 1 shows a circuit diagram of an LED driver according to the related art;

FIG. 2 shows a circuit diagram of an open circuit protection circuit for an LED driver according to the related art;

FIG. 3 shows a block diagram of an open circuit protection circuit for an LED driver according to the concepts of the present disclosure;

FIG. 4(a) and 4(b) show circuit diagrams of open circuit detection sub-circuits included in an open circuit protection circuit according to an exemplary embodiment of the present disclosure;

FIG. 5 shows an embodiment of an open circuit protection circuit for an LED driver according to the concepts of the present disclosure;

FIG. 6 shows another embodiment of an open circuit protection circuit for an LED driver according to the concepts of the present disclosure; and

FIG. 7 shows still another embodiment of an open circuit protection circuit for an LED driver according to the concepts of the present disclosure.

## DETAILED DESCRIPTION

Hereinafter, the embodiments of the present disclosure will be described with reference to the accompanying drawings. It should be understood, however, that these descriptions are merely exemplary and are not intended to limit the scope of the present disclosure. In addition, in the following description, descriptions of well-known structures and techniques are omitted to avoid unnecessarily obscuring the concepts of the present disclosure.

The terminology used herein is for the purpose of describing particular embodiments only and is not intended to be limiting of the disclosure. The singular form such as "a" , "an" , "the" , and the like, as used herein, is intended to include plural form, such as "a plurality of" and "multiple" , unless the context clearly dictates otherwise. Furthermore, the terms "include" , "comprise" , and the like, as used herein indicate the presence of stated features, steps, operations, and/or components but do not exclude the presence or addition of one or more other features, steps, operations, or components.

All terms (including technical and scientific terms) used herein have the meaning as commonly understood by one of ordinary skill in the art, unless otherwise defined. It should be noted that terms used herein should be interpreted as having a meaning that is consistent with the context of the present description and should not be interpreted in an idealized or overly stereotypical manner.

Several block diagrams and/or flow charts are shown in the drawings. It should be understood that some of the block diagrams and/or flow charts or combinations thereof may be implemented by computer program instructions. Such computer program instructions may be provided to a processor of a general purpose computer, a special purpose computer, or other programmable data processing apparatus such that the instructions, when executed by the processor, may create means for implementing the functions/operations illustrated in these block diagrams and/or flow charts.

Accordingly, the techniques of the present disclosure may be implemented in the form of hardware and/or software (including firmware, microcode, etc.). Additionally, the techniques of the present disclosure may take the form of a computer program product, which is on a computer readable medium stored with instructions and can be used by or in connection with an instruction execution system. In the context of the present disclosure, a computer readable medium may be any medium that can contain, store, communicate, propagate, or transport the instructions. For example, computer readable medium may include but are not limited to electrical, magnetic, optical, electromagnetic, infrared, or semiconductor systems, apparatus, devices, or propagation medium. Specific examples of computer readable medium include a magnetic storage device such as a magnetic tape or a hard disk (HDD), an optical storage device such as a compact disc (CD-ROM), a memory such as a random access memory (RAM) or a flash memory, and/or wired/wireless communication link.

Embodiments of the present disclosure provide an open circuit protection circuit for an LED driver, which may have a simple structure and a small leakage current.

FIG. 3 shows a block diagram of an open circuit protection circuit 320 for an LED driver 310 according to the concepts of the present disclosure. The LED driver 310 may include an LED driving circuit 311 and an LED string 312. The specific implementation may be referred to FIG. 1 and will not be described herein. It should be noted that although FIG. 3 only illustrates one LED string, the LED driver 310 may actually include one or more LED strings. In addition, FIG. 1 only shows an implementation of the LED driver to which the open circuit protection circuit according to an exemplary embodiment of the present disclosure can be applied, and the present disclosure is not limited thereto. That is, the open circuit protection circuit according to an exemplary embodiment of the present disclosure may also be applied to an LED driver having a similar or different topology. Referring back to FIG. 3, the open circuit protection circuit 320 for an LED driver according to the concepts of the present disclosure in FIG. 3 may include an open circuit detection sub-circuit 321 and an open circuit protection execution sub-circuit 322. The open circuit detection sub-circuit 321 is connected to both ends of each of the plurality of LED strings included in the LED driver, and configured to determine whether one or more of the plurality of LED strings are open according to respective voltage difference across each LED string. The open circuit protection execution sub-circuit 322 may be electrically connected to a first node (for example, node A as shown in FIG. 1) for open circuit control in the LED driver, and configured to receive the determination result from the open circuit detection sub-circuit, and to control whether to perform open circuit protection or not according to the determination result. The open circuit protection execution sub-circuit 322 may be further configured to: clamp the voltage of the first node to a low voltage, so as to perform open circuit protection, in response to the open circuit detection sub-circuit determining that one or more of the plurality of LED strings are open.

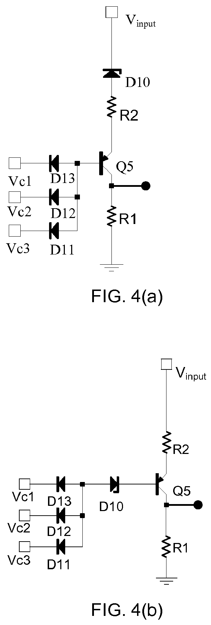

FIG. 4(a) and 4(b) show circuit diagrams of open circuit detection sub-circuits included in the open circuit protection circuit according to an exemplary embodiment of the present disclosure. As shown in FIG. 4(a), the open circuit detection sub-circuit 321 may comprise: a first transistor Q5 having the collector grounded via a first resistor R1; a plurality of diodes D13, D12 and D11 corresponding to the plurality of LED strings, wherein each of the plurality of diodes has the cathode connected to the cathode of a corresponding LED string, and the anode connected to the base of the first transistor; and a Zener diode D10 having the cathode connected to the anodes of the plurality of LED strings and the anode connected to the emitter of the first transistor Q5. In the LED driving circuit shown in FIG. 1, the anodes of the plurality of LED strings are connected to an input power source $V_{input}$. Specifically, the Zener diode D10 may has an operating voltage substantially the same as the voltage at which the LED strings operate normally. Additionally, the open circuit detection sub-circuit 321 may further include a second resistor R2, wherein the anode of the Zener diode D10 is connected to the emitter of the first transistor via the second resistor R2. The second resistor may be used to limit the current of the emitter of the first transistor Q5.

It should be noted that the position of the Zener diode D10 is not limited to the position shown in FIG. 4(a), and it may be connected between the plurality of diodes and the first transistor Q5, as shown in FIG. 4(b). In FIG. 4(b), the first transistor Q5 has the collector grounded via the first resistor R1, the emitter connected to the anodes of the plurality of LED strings, and the base connected to the cathode of a Zener diode D10. The anode of the Zener diode is connected to the anodes of the plurality of diodes D13, D12 and D11. Similarly, the open circuit detection sub-circuit shown in FIG. 4(b) may also include the second resistor R2 for limiting the current of the emitter of the first transistor Q5, wherein the emitter of the first transistor Q5 is connected to the anodes of the plurality of LED strings (,which are further connected too input power source $V_{input}$ in the LED driving circuit shown in FIG. 1) via the second Resistor R2.

In the above exemplary embodiment, the first transistor Q5 may be a P-type transistor.

Furthermore, the open circuit protection execution sub-circuit 322 may be implemented as the second transistor Q6. The second transistor Q6 has the base connected to the collector of the first transistor Q5, the emitter connected to the ground, and the collector connected to the first node (in the circuit shown in FIG. 1, corresponding to the first node A). In one example, the second transistor Q6 may be an N-type transistor.

It should be noted that when the open circuit detection sub-circuit is connected to the open circuit protection execution sub-circuit, the first resistor R1 included in the open circuit detection sub-circuit shown in FIGS. 4(a) and 4(b) may be used to prevent the second transistor Q6 from being turned on by the leakage current, so as to achieve a more reliable open circuit protection circuit.

In addition, the open circuit protection circuit for an LED driver according to the concepts of the present disclosure may further include a first capacitor C1 for electromagnetic compatibility, the first capacitor C1 having one electrode connected between the open circuit detection sub-circuit and the open circuit protection execution sub-circuit, and the other electrode grounded.

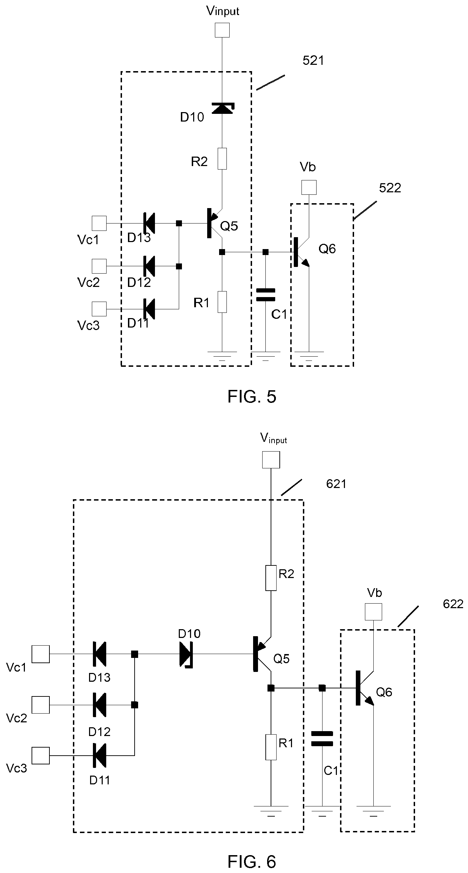

Each of FIGS. 5 and 6 shows an embodiment of the open circuit protection circuit for an LED driver according to the concepts of the present disclosure. The open circuit protection circuits shown in FIGS. 5 and 6 will be described below in conjunction with the LED driver shown in FIG. 1.

Specifically, as shown in FIG. 5, the open circuit protection circuit includes an open circuit detection sub-circuit 521 and an open circuit protection execution sub-circuit 522. The detection points Vc1, Vc2, and Vc3, each of which corresponds to one of the plurality of LED strings included in the LED driver, are respectively connected to the base of the first transistor Q5 via a diode (D13, D12 or D11) corresponding thereto. The first transistor has the emitter connected to the input power source via the second resistor R2 and the Zener diode D10, and the collector grounded via the first resistor R1. The second transistor Q6 has the base connected to the collector of the first transistor Q5, the emitter grounded, and the collector connected to an input power feeding node of the LED driver (node A as shown in FIG. 1), so as to clamp the input power feeding node, thereby achieving open circuit protection. In addition, the open circuit protection circuit further includes the first capacitor C1 for electromagnetic compatibility, which is connected between the base of the second transistor Q6 and the ground. In this embodiment, the first transistor Q5 is a P-type transistor and the second transistor Q6 is an N-type transistor.

When the LED drivers operate normally, the detection points (Vc1, Vc2, and Vc3) in each LED string should be at a high level, and the voltage Vb at the first node A is at a high level. At this time, for the open circuit protection circuit of FIG. 5, since the voltage difference between $V_{input}$ and Vcx may be less than the sum of the voltage across the Zener diode D10, the voltage between the emitter and base of the transistor Q5, and the PN junction voltage of the diode, namely:

$$V_{input}\text{-}Vcx < Vz_{(D10)} + Vbe_{(Q5)} + Vd \quad \text{(where x=1, 2 or 3).}$$

the transistor Q5 is turned off, and thereby its collector is at a low level. At this time, the transistor Q6 is also turned off under the control of the transistor Q5, and therefore, Vb is kept at the high level.

When an LED in the LED driver is open (for example, D1 is open), the detection point (Vc1) in the first LED string should be at the low level, while the detection points (Vc2 and Vc3) of other LED strings should be at the high level, and at this time, the voltage Vb at the first node A is maintained at the high level due to the normal operation at last moment. Thus, for the open circuit protection circuit of FIG. 5, the voltage difference between $V_{input}$ and Vc1 may be greater than the sum of the voltage across the Zener diode D10, the voltage between the emitter and base of the first transistor Q5, and the PN junction voltage of the diode, namely:

$$V_{input}\text{-}Vc1 > Vz_{(D10)} + Vbe_{(Q5)} + Vd.$$

Therefore, the first transistor Q5 is turned on, and its collector should be at the high level. It should be noted that the diodes D11, D12 and D13 are used as a logical AND gate. That is to say, when the voltage of any one of the detection points enables the first transistor Q5 to be turned on, the first transistor Q5 is turned on. At this time, the transistor Q6 is also turned on under the control of the transistor Q5, so that the voltage Vb at the first node A is clamped to the low level. Then, Vb which is at the low level causes the transistors Q3 and Q4 in the LED driver to be turned off, thereby achieving open circuit protection for the LED driver. In other words, the above circuit is capable of detecting whether one or more of the plurality of LED strings in the LED driver are open or not.

In the circuit, the second resistor R2 is connected between the Zener diode D10 and the first transistor Q5, so as to limit the current of the emitter of the first transistor Q5. In addition, the first resistor R1 is connected between the collector of the first transistor Q5 and the ground, so as to prevent the second transistor Q6 from being turned on by the leakage current. Furthermore, the open circuit protection circuit further comprises the first capacitor C1 connected between the base of the second transistor Q6 and the ground for electromagnetic compatibility.

As can be seen from FIG. 5, the present disclosure provides an open circuit protection circuit with a simpler structure, compared to existing open circuit protection circuits for LED drivers. The open circuit protection circuit may be used to simultaneously monitor whether multiple LED strings included in the LED driver are open or not, and to turn off the LED driver when one or more LED strings are open, thereby achieving open circuit protection. In addition, it should be noted that since unidirectional diodes are adopted to connect to the detection points in the circuit, there is no possibility of a large leakage current resulted from forming a closed path between the devices as shown in FIG. 2. However, for the circuit shown in FIG. 5, the leakage current may still exist, since the voltage Vb at the first node may not be fully clamped to 0V, so that the transistors Q3 and Q4 in FIG. 1 are partially turned on, leading to possible leakage currents in the LED strings. In the example shown in FIG. 5, the magnitude of each of the leakage currents in the second and third LED strings is about 400 nA, which is significantly smaller than the leakage current shown in FIG. 2. Certainly, such kind of leakage current may also exist in the circuit shown in FIG. 2, but the leakage current caused by the incomplete turning-off of the device is much smaller compared with the leakage current caused by the formation of a closed path as described above, so it is not considered as a major factor.

The above describes the leakage current generated by the circuits in the LED driver in the case where the transistors Q3 and Q4 are transistors having the same parameters. However, in the case where the transistors Q3 and Q4 parameters (saturation current) are different (for example, differ by 10 times), the leakage currents in the paths of the two LED strings are approximately 400 nA and 4 $\mu$A, respectively. Although the leakage currents of the two strings differ significantly, each of the leakage currents is less than 10 $\mu$A, which does not affect the overall effect of the LED circuit.

FIG. 6 shows another embodiment of the open circuit protection circuit for an LED driver according to the concepts of the present disclosure. The open circuit protection circuit shown in FIG. 6 may also include an open circuit detection sub-circuit 621 and an open circuit protection execution sub-circuit 622. The embodiment shown in FIG. 6 differs from the embodiment shown in FIG. 5 only in the position of the Zener diode D10. In FIG. 6, the Zener diode is connected between the plurality of diodes connecting with the detection points and the base of the first transistor Q5. The circuit principle is the same as that of the embodiment shown in FIG. 5, and therefore will not be described again.

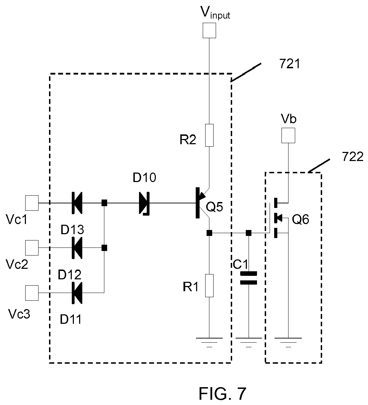

In addition to implementing the second transistor Q6 with a bipolar transistor as described above, other transistors may be used. FIG. 7 shows still another embodiment of the open circuit protection circuit for an LED driver according to the concepts of the present disclosure. In this embodiment, the open circuit protection circuit may include an open circuit detection sub-circuit 721 and an open circuit protection execution sub-circuit 722. However, the difference between the embodiment shown in FIG. 7 and the embodiment shown in FIG. 6 is that the second transistor Q6 is implemented as a MOSFET in FIG. 7. The open circuit protection circuit shown in FIG. 7 also has a simple structure and a small leakage current. Specifically, when the MOSFET is used to implement the second transistor Q6, the open circuit protection operation can be performed more quickly.

In addition, it should be noted that although the embodiments of the method according to the exemplary embodiments of the present disclosure are separately described above in separate forms, the features described in the various embodiments described above may be combined in a single embodiment in any manner without departing from the concepts of the present disclosure, and features described in a single embodiment may also be implemented separately in various embodiments.

Although the present disclosure has been shown and described with reference to specific exemplary embodiments thereof, it will be understood by those skilled in the art that various changes in form and detail may be made without departing from the spirit and scope of the disclosure, which is defined by the appended claims and their equivalents. Therefore, the scope of the disclosure should not be limited to the above-described embodiments, but should be determined not only by the appended claims but also by equivalents of the appended claims.

**Claims**

1. A circuit for open circuit protection of a LED driver, comprising:

   an open circuit detection sub-circuit (321, 521, 621, 721), connected to both ends of each of a plurality of LED strings comprised in the LED driver, and configured to determine whether one or more of the plurality of LED strings are open according to respective voltage difference across each LED string; and
   an open circuit protection execution sub-circuit (322, 522, 622, 722) electrically connected to a first node (A) in the LED driver, and configured to receive a determination result from the open circuit detection sub-circuit (321, 521, 621, 721), and to control whether to perform open circuit protection or not according to the determination result,
   wherein the open circuit protection execution sub-circuit (322, 522, 622, 722) is further configured to: clamp a voltage of the first node (A) to a low voltage to perform open circuit protection, in response to the open circuit detection sub-circuit (321, 521, 621, 721) determining that one or more of the plurality of LED strings are open.

2. The circuit of claim 1, wherein the open circuit detection sub-circuit (321, 521, 621, 721) comprises:

   a first transistor (Q5) having a collector grounded via a first resistor (R1);

a plurality of diodes (D11, D12, D13) corresponding to the plurality of LED strings, wherein each of the plurality of diodes (D11, D12, D13) has a cathode connected to a cathode of a corresponding LED string, and an anode connected to a base of the first transistor (Q5); and

a Zener diode (D10) having a cathode connected to anodes of the plurality of LED strings and an anode connected to an emitter of the first transistor (Q5).

3. The circuit of claim 1, wherein the open circuit detection sub-circuit (321, 521, 621, 721) comprises:

a first transistor (Q5) having a collector grounded via a first resistor (R1), an emitter connected to anodes of the plurality of LED strings, and a base connected to a cathode of a Zener diode (D10);

a plurality of diodes (D11, D12, D13) corresponding to the plurality of LED strings, wherein each of the plurality of diodes (D11, D12, D13) has a cathode connected to a cathode of a corresponding LED string, and an anode connected to an anode of the Zener diode (D10); and

the Zener diode (D10).

4. The circuit of claim 2 or 3, wherein the open circuit protection execution sub-circuit (322, 522, 622, 722) comprises: a second transistor (Q6) having a base connected to the collector of the first transistor (Q5), an emitter connected to the ground, and a collector connected to the first node (A).

5. The circuit of claim 2, wherein the open circuit detection sub-circuit (321, 521, 621, 721) further comprises a second resistor (R2), wherein the anode of the Zener diode (D10) is connected to the emitter of the first transistor (Q5) via the second resistor (R2).

6. The circuit of claim 3, wherein the open circuit detection sub-circuit (321, 521, 621, 721) further comprises a second resistor (R2), wherein the emitter of the first transistor (Q5) is connected to the anodes of the plurality of LED strings via the second resistor (R2).

7. The circuit of claim 2 or 3, wherein the first transistor (Q5) is a P-type transistor.

8. The circuit of claim 4, wherein the second transistor (Q6) is an N-type transistor.

9. The circuit of claim 1 further comprising a first capacitor (C1) having one electrode connected between the open circuit detection sub-circuit (321, 521, 621, 721) and the open circuit protection execution sub-circuit (322, 522, 622, 722), and the other electrode grounded.

FIG. 1

FIG. 2

FIG. 3

FIG. 4(a)

FIG. 4(b)

Vinput

521

D10

R2

Vb

522

Vc1 D13 Q5 Q6

Vc2 D12

Vc3 D11 R1 C1

## FIG. 5

Vinput

621

R2

Vb

622

Vc1 D13 D10 Q5 Q6

Vc2 D12

Vc3 D11 R1 C1

## FIG. 6

FIG. 7

Europäisches
Patentamt

European
Patent Office

Office européen
des brevets

**EUROPEAN SEARCH REPORT**

Application Number

EP 19 18 2172

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/184491 A1 (WALTERS RICHARD J [US]) 28 June 2018 (2018-06-28) * [0025]-[0028],[0031]-[0035]; paragraph [0035]; figure 3 * | 1-9 | INV. H05B33/08 |
| X | WO 2012/077013 A2 (KONINKL PHILIPS ELECTRONICS NV [NL]; JWANIA AHMAD SAMEH [US]) 14 June 2012 (2012-06-14) * page 5, line 5 - page 6, line 13; figures 1,2 * | 1 | |

TECHNICAL FIELDS
SEARCHED (IPC)

H05B

The present search report has been drawn up for all claims

| Place of search | Date of completion of the search | Examiner |
|---|---|---|
| Munich | 3 September 2019 | Garavini, Elisa |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                             
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 18 2172

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2019

| Patent document cited in search report | Publication date | Patent family member(s) | Publication date |
|---|---|---|---|
| US 2018184491 A1 | 28-06-2018 | CN 108235506 A<br>DE 102017222461 A1<br>US 2018184491 A1 | 29-06-2018<br>28-06-2018<br>28-06-2018 |
| WO 2012077013 A2 | 14-06-2012 | NONE | |

EPO FORM P0459

For more details about this annex : see Official Journal of the European Patent Office, No. 12/82

**EP 3 589 079 A1**

**REFERENCES CITED IN THE DESCRIPTION**

**Patent documents cited in the description**

- CN 201810721053